# EUROPÄISCHE PATENTSCHRIFT

(11) **EP 0 929 041 B1**
(45) Veröffentlichungstag und Bekanntmachung des Hinweises auf die Patenterteilung: **21.09.2011**
(21) Anmeldenummer: 99100302.1
(22) Anmeldetag: 08.01.1999
(51) Int. Cl.: G06F 13/364, G06F 13/42, G06F 13/36

(54) **Verfahren und Anordnung zum Betreiben eines Bussystems**
Method and arrangement for operating a bus system
Méthode et dispositif d'opération d'un système de bus

(30) Priorität: 12.01.1998 US 5696
(43) Veröffentlichungstag der Anmeldung: 14.07.1999
(73) Patentinhaber: Infineon Technologies AG, 85579 Neubiberg (DE)
(72) Erfinder: Rohm, Peter, 85276 Pfaffenhofen (DE); Erdmann, Michael, 81739 München (DE); Bacigalupo, Tommaso, San Jose, CA 95127 (US)

(56) Entgegenhaltungen:
- EP-A- 0 555 680
- EP-A- 0 609 041
- EP-A- 0 737 924
- WO-A-96/07970
- US-A- 4 785 394
- US-A- 5 469 435
- US-A- 5 504 874
- US-A- 5 533 204
- IEEE: "IEEE Standard for Futurebus+ - Logical Protocol Specification" IEEE STD 896.1-1991 FUTUREBUS+, [Online] 1991, XP002333321 Gefunden im Internet: URL:http://ieeexplore.ieee.org/iel1/2921/4 173/00159471.pdf?isnumber=4173&prod=STD&ar number=159471&arSt=&ared=&arAuthor=> [gefunden am 2005-06-23]
- MOTOROLA AND IBM: "PowerPC 601 RISC Microprocessor User's Manual" MOTOROLA AND IBM, [Online] 1995, XP002333246 Gefunden im Internet: URL:http://www.freescale.com/files/32bit/d oc/user_guide/MPC601UM.pdf> [gefunden am 2005-06-17]
- PATENT ABSTRACTS OF JAPAN Bd. 016, Nr. 241 (P-1363), 3. Juni 1992 (1992-06-03) & JP 04 051349 A (HITACHI LTD), 19. Februar 1992 (1992-02-19)

## Beschreibung

Die vorliegende Erfindung betrifft ein Verfahren gemäß dem Oberbegriff von Patentanspruch 1 und eine Anordnung gemäß dem Oberbegriff von Patentanspruch 17.

Ein derartiges Verfahren bzw. eine derartige Anordnung ist im wesentlichen in der US 5533204 beschrieben.

Bussysteme für Mikroprozessoren, insbesondere für Mikrocontroller, bei denen ein Bussystem für die Anbindung von Peripherieeinheiten an einen Prozessorkern vorgesehen sind, sind z. B. aus Elektronik Report 10a, Oktober 1990, bekannt. Dort ist auf Seite 58 ff., insbesondere auf der Seite 59 und der zugehörigen Figur, der prinzipielle Aufbau eines derartigen Mikroprozessors dargestellt. Der beschriebene Mikroprozessor besteht aus einer zentralen Recheneinheit (Core-Prozessor) und verschiedenen Peripherieeinheiten (Serial I/O, Timer, DMA-Controller). Alle Einheiten sind über einen internen Bus (Inter-Module-Bus) miteinander verbunden. Weiterhin ist eine Bussteuereinheit (System-Interface) vorgesehen, die einen externen anschließbaren Bus mit dem internen Bus verbindet.

Der Zugriff auf eine an diesen Bus angeschlossene Peripherieeinheit erfolgt überlicherweise derart, daß die zugreifende Funktionseinheit, zumeist handelt es sich hierbei um die zentrale Recheneinheit oder einen anderen Busmaster, die Adressen der anzusprechenden Peripherieeinheit auf den Adreßbus anlegt und auf den Datenbus die zu übertragenen Daten anlegt. Mittels Kontrollsignalen erfolgt dann in verschiedenster Weise die Datenübertragung. Bei einem Bussystem, welches im Demultiplexbetrieb arbeitet, werden die Adreßsignale gleichzeitig auf zugehörigen Adreßleitungen übertragen. Bei Bussystemen, die im Multiplexbetrieb arbeiten, kann ein Teil der Adresse auf dem Datenbus gelegt werden und diese von einem Speicher in der Peripherieeinheit zwischengespeichert werden. Der restliche Teil der Adresse wird dann auf die Adreßleitungen des Adreßbusses übertragen.

Liegt die jeweilige Adresse an, so wird die zugehörige Peripherieeinheit selektiert und die entsprechenden Daten werden von der zentralen Recheneinheit oder der adressierten Peripherieeinheit auf den Datenbus gelegt, je nach dem ob geschrieben oder gelesen wird. Während der eigentlichen Datenübertragung müssen die Nachfolgeadressen konstant am Adreßbus anliegen, um so eine gültige Datenübertragung zu gewährleisten.

Werden sehr schnelle zentrale Recheneinheiten verwendet, wie z. B. Riscprozessoren, so ist jedoch oftmals die Übertragungsgeschwindigkeit auf derartigen Bussen nicht ausreichend hoch. Immer höhere Übertragungsraten werden somit angestrebt.

Aus der DE 43 17 567 A1 ist ein gattungsgemäßes Verfahren zum Betreiben eines Bussystems sowie eine Anordnung zur Durchführung des Verfahrens bekannt. Das dort beschriebene Bussystem weist eine Mastereinheit auf, die über einen Bus mit einer Slave-Einheit unter Steuerung einer Bussteuereinheit kommuniziert. Bei Vorhandensein mehrerer Mastereinheiten steuert die Bussteuereinheit die Busarbitrierung, das heißt die Zuteilung des Busses an eine der Mastereinheiten, sowie die Kontrolle der Datenübertragung bei einer eventuellen Zeitüberschreitung. Die eigentliche Datenübertragung wird dann in der jeweiligen aktiven Mastereinheit und der von ihr adressierten Slave-Einheit durchgeführt. Dabei werden über eine Vielzahl von Steuerleitungen die Eigenschaften eines Buszyklusses, wie z. B. die Datenbreite, Zugriff auf Daten- oder Steuerbereich, Wartezyklus, Time-out, usw., kodiert übertragen.

Bei der immer komplexer werdenden Integration von Mikrocontroller- bzw. Mikroprozessorsystemen auf einem Chip (System-On-Chip) wird jedoch die Kommunikation zwischen den verschiedenen Komponenten des Systems zu einem entscheidenden Kriterium für die Leistungsfähigkeit des gesamten Systems. An einem derartigen Bussystem sind typischerweise immer mehr übergeordnete Einheiten (Mastereinheiten) und untergeordnete Einheiten (Slave-Einheiten) beteiligt. Die Kommunizierung dieser sogenannten Multi-Mastereinheiten über den Bus mit den verschiedenen Slave-Einheiten bzw. Peripherieeinheiten wird somit immer komplizierter. Dies macht ein intelligenteres und flexibleres Protokol zum Betreiben des Busses und der an dem Bussystem beteiligten Einheiten notwendig.

Ausgehend von diesem Stand der Technik ist es daher die Aufgabe der vorliegenden Erfindung, ein Verfahren und eine Anordnung zum Betreiben eines Bussystems anzugeben, das eine flexiblere Datenübertragung zwischen den an dem Bussystem angeschlossenen Einheiten ermöglicht.

Diese Aufgabe wird erfindungsgemäß durch Vorsehen der in den kennzeichnenden Teilen der Patentansprüche 1 und 18 beanspruchten Merkmale gelöst. Demnach ist vorgesehen, daß
- in der ersten Konfiguration die Datenübertragung aufgeteilt wird in einen Anforderungsdatentransfer und in einen Antwortdatentransfer, und daß in der Zeit zwischen Anforderungsdatentransfer und Antwortdatentransfer der Bus freigegeben wird für die Datenübertragungen weiterer übergeordneten Einheiten und untergeordneten Einheiten, und daß in der zweiten Konfiguration der Bus zwischen Anforderungsdatentransfer und Antwortdatentransfer nicht freigegeben ist, und daß
- mindestens eine der am Bussystem beteiligten Einheiten eine Logikschaltung zum Anfordern, Ablehnen und Auswählen der Datenübertragung in der ersten Konfiguration oder in der zweiten Konfiguration aufweist.

Ausgestaltungen und Weiterbildungen sind Kennzeichen der weiteren Unteransprüche.

Die Erfindung wird nachfolgend anhand der in den Figuren der Zeichnung angegebenen Ausführungsbeispiele näher erläutert. Es zeigt:
- Figur 1: ein prinzipielles Blockschaltbild einer erfindungsge- mäßen Anordnung;
- Figur 2: einen zeitlichen Verlauf verschiedener Signale auf den Signalleitungen des erfindungsgemäßen Bussystems;
- Figur 3: ein vorteilhaftes Ausführungsbeispiel für die Imple- mentierung des erfindungsgemäßen Bussystems;
- Figur 4: ein weiteres vorteilhaftes Ausführungsbeispiel für die Implementierung des erfindungsgemäßen Bussystems.

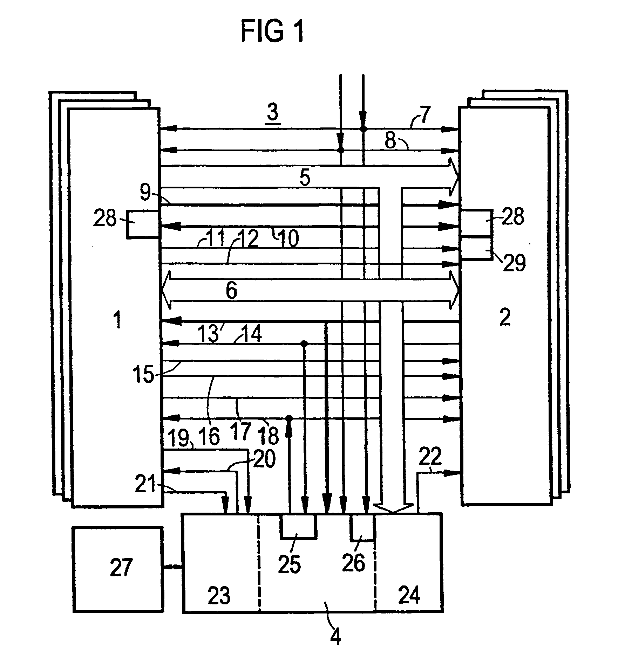

Figur 1 zeigt ein prinzipielles Blockschaltbild eines erfindungsgemäßen Bussystems. Das Bussystem weist eine übergeordnete Einheit 1 und eine untergeordnete Einheit 2 auf. Nachfolgend wird die übergeordnete Einheit 1 als Mastereinheit und die untergeordnete Einheit 2 als Slave-Einheit bezeichnet. Die Mastereinheit 1 kann dabei durch eine zentrale Recheneinheit wie z. B. einen Risc-Prozessor dargestellt werden. Die Slave-Einheit kann beispielsweise durch jede Art von Peripherieeinheit, Speichereinheit, oder ähnliches realisiert sein. Dabei kann eine Peripherieeinheit sowohl als Slave-Peripherieeinheit als auch als Master-Peripherieeinheit ausgebildet sein. Es wäre also auch denkbar, daß eine Slave-Einheit 2 ebenfalls durch eine zentrale Recheneinheit oder durch einen Co-Prozessor ausgebildet ist.

Wie in Figur 1 angedeutet, können mehrere Mastereinheiten 1 sowie mehrere Slave-Einheiten 2 an dem Bussystem beteiligt sein. Derartige Systeme, bei denen mehrere Mastereinheiten an einem einzelnen Bus 3 beteiligt sind, werden auch als Multi-Masterbussysteme bezeichnet. Die Anzahl von Mastereinheiten 1 und Slave-Einheiten 2 ist systemabhängig und nicht weiter definiert.

Die Mastereinheiten 1 und die Slave-Einheiten 2 sind über einen Bus 3 miteinander verbunden. Der Bus 3 enthält eine Vielzahl von Adreßleitungen, Datenleitungen und Steuerleitungen. Zusätzlich ist zwischen den Mastereinheiten 1 und den Slave-Einheiten 2 eine Bussteuereinheit 4 vorgesehen, die eine Arbitrierung und Steuerung des Busses 3 vornimmt.

Mit 6 ist ein Datenbus und mit 5 ein Adreßbus bezeichnet. Der Datenbus 6 wird bidirektional zwischen Mastereinheiten 1 und Slave-Einheiten 2 betrieben. Der Adreßbus 5 wird hingegen typischerweise unidirektional zwischen Mastereinheiten 1 und Slave-Einheiten 2 sowie der Bussteuereinheit 4 betrieben. Zusätzlich weist der Bus 3 eine Vielzahl von Steuerleitungen 9...22, über die die Datenübertragung gesteuert wird. Desweiteren weist das Bussystem eine Taktleitung 7 und mindestens eine Reset-Leitung 8 auf.

Nachfolgend wird eine genauere Beschreibung der Busleitungen des Bussystems sowie der darauf übertragenen Signale angegeben:

### Systemsignale:

### Taktleitung 7:

Clock-Signal (CLK-Signal); über die Taktleitung 7 läßt sich der Bustakt in jede der am Bussystem beteiligten Einheiten einkoppeln. Der Bustakt kann als Referenz für die zeitliche Steuerung der Signalabläufe über den Bus 3 benutzt werden. D. h. über die Bussteuereinheit 4 kann der Bus 3 zu einer Taktperiode immer nur einer der Mastereinheiten 1 zugeteilt sein.

### Resetleitung 8:

Reset-Signal (RES-Signal); über das generierte Reset-Signal lassen sich die an dem Bussystem beteiligten Einheiten zurücksetzen. In der Hochlaufphase kann das Reset-Signal asynchron sein, während es im Normalbetrieb synchron zum Taktsignal aktiviert wird. Die Deaktivierung des Reset-Signals erfolgt jedoch typischerweise immer taktsynchron.

### Signale der Bussteuereinheit 3:

### Steuerleitung 19:

Bus-Request-Signal (REQ-Signal); mit dem Bus-Request-Signal fordert eine Mastereinheit 1 den Bus 3 zu Beginn eines Buszyklus für eine Datenübertragung mit einer Slave-Einheit 2 an. Sind mehrere Mastereinheiten 1 an dem Bussystem beteiligt, dann hat jeder der Mastereinheiten 1 eine separate Leitung zur Bussteuereinheit 4.

### Steuerleitung 20:

Bus-Grant-Signal (GNT-Signal); mit diesem Zuteilungssignal gibt eine Zuteilungseinheit 23 innerhalb der Bussteuereinheit 4 der Mastereinheit 1 bekannt, wann diese auf den Bus 3 zugriffsberechtigt ist und wann diese mit der Datenübertragung beginnen kann.

### Steuerleitung 21:

Lock-Signal; mit diesem sogenannten Blockiersignal kann eine Mastereinheit 1 aufeinanderfolgende Buszyklen, ohne daß die Datenübertragung durch eine oder mehrere andere Mastereinheiten 1 unterbrochen wird, durchführen.

### Steuerleitung 22:

Slave-Select-Signal (SEL-Signal); das Slave-Select-Signal dient der Selektierung einer Slave-Einheit 2. Dazu weist jede über den Bus 3 als Slave-Einheit 2 ansprechbare Einheit einen Signaleingang auf, in den das Slave-Select-Signal zur Auswahl der jeweiligen Slave-Einheit 2 bei einer Datenübertragung eingekoppelt werden kann.

### Adreß- und Datensignale:

### Adreßbus 5:

Adreßsignal (A-Signal); die Adreßsignale auf dem Adreßbus 5 werden von der an einer Datenübertragung beteiligten Mastereinheit 1 getrieben. Diese Adreßsignale werden dann in einen Adreßdecoder 24 der Bussteuereinheit 3 eingekoppelt. Ausgehend von diesem Adreßsignal wird dann das Slave-Select-Signal zur Auswahl der entsprechenden adressierten Slave-Einheit 2 erzeugt. Dabei werden nicht zwingend alle Adreßleitungen zur Generierung des Slave-Select-Signals herangezogen, sondern typischerweise nur die notwendige Anzahl der oberen Adreßleitungen.

Zusätzlich kann eine Teiladresse über einen Teil der Adreßleitungen 5 in die entsprechende Slave-Einheit 2 direkt angekoppelt werden. Die Adreßbreite des Adreßbusses 5 kann dabei 8, 16, 32 Bit betragen. Der Einfachheit halber wird nachfolgend davon ausgegangen, daß der Adreßbus 5 eine Adreßbreite von 32 Bit aufweist. Diese Adresse wird in den Adreßdecoder 24 eingekoppelt während die zur internen Adressierung notwendige Anzahl (2 bis n) Bits in die Slave-Einheit 2 direkt eingekoppelt werden.

### Datenbus 6:

Datensignal (D-Signal); die Datensignale auf dem Datenbus 6 werden bidirektional entweder von der Mastereinheit 1 oder der Slave-Einheit 2 getrieben. Die Datenrichtung hängt davon ab, ob während eines Buszyklus die Mastereinheit 1 Daten auf den Datenbus 6 schreibt (Write-Modus) oder Daten aus dem Datenbus 6 herausliest (Read-Modus). Die Anzahl der Datenleitungen 6 des Datenbusses bzw. die Datenbusbreite kann abhängig von der Systemimplementierung 8, 16, 32 oder 64 Bit betragen. Nachfolgend wird davon ausgegangen, daß der Datenbus 6 eine Datenbusbreite von 32 Bit aufweist.

### Steuersignale:

### Steuerleitung 9 (ID-Bus):

TAG-Signal; um einen Datenübertragungstransfer durchzuführen, sendet die Master-Einheit 1 ein sogenanntes Identifizierungssignal (TAG-Signal) zu der adressierten Slave-Einheit 2. Dieses Identifizierungssignal wird verwendet, um den richtigen Busteilnehmer für die Antwort zu adressieren. Damit wird sichergestellt, daß jede der Mastereinheiten 1 jeweils maximal nur an einem Datentransfer gleichzeitig beteiligt ist. Die Busbreite des ID-Busses begrenzt somit auch die maximale Anzahl der an dem Bussystem beteiligten Mastereinheiten 1. Im vorliegende Fall handelt es sich dabei um einen 4-Bit ID-Bus. Das heist, es können maximal 16 Mastereinheiten 1 an dem Bussystem beteiligt sein.

### Steuerleitung 10 (Operation-Code-Bus):

Operation-Code-Signal (OPC-Signal); mit dem Operation-Code-Signal werden von der Mastereinheit 1 zusätzliche Eigenschaften eines Buszyklus codiert übertragen. Solche Eigenschaften können beispielsweise die Größe der übertragenen Dateneinheit (8/16/32/64 Bit), Wartezyklen, geteilter Datentransfer in Anforderungsdatentransfer und Antwortdatentransfer (geteilte Blöcke), Dauer der Unterbrechung zwischen Anforderungsdatentransfer und Antwortdatentransfer, Quittiersignale, ect. sein. Die Steuerleitungen des Operation-Code-Busses 10 werden von dem jeweiligen an der Datenübertragung beteiligten Master getrieben. Das bedeutet, bei einem geteilten Datentransfer kann auch die adressierte Slave-Einheit 2 den Operation-Code-Bus 10 treiben, wobei hier die Slave-Einheit 2 als Master fungiert.

Der mit 10 bezeichnete Operation-Code-Bus kann je nach Umfang der codierten Operation-Code-Signale aus mehreren Einzelsignalleitungen bestehen, z. B. aus vier Einzelleitungen (4 Bit).

### Steuerleitung 11:

Abort-Signal; über dieses Abbruchsignal kann eine schon begonnene Datenübertragung wieder rückgängig gemacht werden bzw. abgebrochen werden.

### Steuerleitung 12:

Supervisor-Signal (SVM-Signal); dieses Überwachungssignal unterscheidet, ob die an der Datenübertragung beteiligte Mastereinheit 1 im sogenannten Supervisor-Mode oder im User-Mode betrieben wird. Der User-Mode und der Supervisor-Mode sind zwei verschiedene Level von Zugriffen: Register und Adressen, die Supervisor-Mode-Zugriff haben, sind im User-Mode nicht zu beschreiben bzw. Auszulesen. In diesem Fall muß eine Fehlermeldung ausgegeben werden. Register und Adressen, die User-Mode-Zugriff haben, sind im Supervisor-Mode problemlos zu beschreiben bzw. Auszulesen. Der Supervisor-Mode ist somit höherwertiger als der User-Mode. Der aktuelle Busmaster signalisiert somit mit dem SVM-Signal in welchem dieser Modi er gerade arbeitet.

### Steuerleitung 13 (ACK-Bus):

Acknowledge-Code-Signal (ACK-Signal); dieses Bestätigungssignal wird von der an einem Datentransfer beteiligten Slave-Einheit 2 erzeugt. Diese Slave-Einheit 2 zeigt über das Bestätigungssignal an, ob beispielsweise gültige Daten bereitstehen, ob Daten verarbeitet wurden, ob Wartezyklen eingefügt werden, ob Fehlerzustände bei einem aktuellen Buszyklus aufgetreten sind, etc. Die Bestätigungssignale auf den Steuerleitungen 13 werden typischerweise in codierter Form übertragen. Im vorliegenden Fall ist der ACK-Bus 13 2 Bit breit.

### Steuerleitung 14:

Ready-Signal (RDY-Signal); das Bestätigungssignal auf der Steuerleitung 14 wird von der an einer Datenübertragung beteiligten Slave-Einheit 2 getrieben und kennzeichnet das Ende der entsprechenden Datenübertragung. Im Falle, daß die Datenübertragung über Wartezyklen, das heißt nicht über geteilten Blöcken, stattfindet, kann die Steuerleitung 14 auch inaktiv gesetzt werden.

### Steuerleitung 15:

No-Split-Signal; über dieses Signal, das von der Mastereinheit 1 getrieben wird, kann eine Datenübertragung durch Wartezyklen erzwungen werden, d. h. die Datenübertragung erfolgt dann nicht in geteilten Blöcken.

### Steuerleitungen 16, 17:

Write/Read-Signale (WR/RD-Signale); mit dem Lesesignal bzw. dem Schreibsignal zeigt eine Mastereinheit 1 zu Beginn eines Buszyklus der über das Slave-Select-Signal 22 adressierten Slave-Einheit 2 an, ob innerhalb dieses Buszyklus Daten von oder zu dieser Slave-Einheit übertragen werden. Die Schreib- /Leseleitungen 16, 17 werden von der an der Datenübertragung beteiligten Mastereinheit 1 getrieben.

In einer vorteilhaften speziellen Ausgestaltung kann hier auch ein spezieller Lese-/Ändere-/Schreibmodus vorgesehen sein. Die Slave-Einheit 2 bekommt die Ausführung eines derartigen speziellen Datentransfers per Read-Write-Steuerleitungen 16, 17 mitgeteilt. Sie kann dann einen Schutz der Bits durchführen, die nicht geändert wurden. So wird z.B. wenn nur ein Bit geändert wurde, auch nur dieses Bit zurückgeschrieben, so daß zwischenzeitliche Änderungen in den anderen Bits nicht verloren gehen.

### Steuerleitung 18:

Time-Out-Signal (TOUT-Signal); über dieses Time-Out-Signal bricht die Bussteuereinheit 4 eine bereits begonnene Datenübertragung zwischen Mastereinheit 1 und Slave-Einheit 2, beispielsweise aufgrund einer für das System unzulässig langen Belegung des Buszugriffs, ab. Wird das Time-Out-Signal aktiv gesetzt, müssen die an der Datenübertragung beteiligte Mastereinheit 1 und Slave-Einheit 2 ihre aktiv getriebenen Signalleitungen inaktiv setzen bzw. abschalten. Die die Abschaltung bestimmende Zeit der Busbelegung, d. h. die Anzahl der Taktzyklen, kann in der Bussteuereinheit 4 fest oder variabel definiert sein.

Nachfolgend werden die Elemente des Bussystems sowie deren Funktion näher erläutert.

Im vorliegenden Beispiel ist eine Vielzahl von Mastereinheiten 1 und Slave-Einheiten 2 an dem Bussystem beteiligt. Die Mastereinheit 1 weist somit eine Master-Schnittstelle und die Slave-Einheit 2 eine Slave-Schnittstelle zum Bus 3 auf. Es wäre jedoch auch möglich, daß eine Mastereinheit 1 als Slave-Einheit 2 fungiert bzw. eine Slave-Einheit 2 auch als Mastereinheit 1 fungiert. Derartige Einheiten werden als Master-/Slave-Einheiten bezeichnet und weisen eine Master-Slave-Schnittstelle zum Bus 3 auf. Die Verwendung von Master-Slave-Einheiten anstelle von Mastereinheiten 1 ist besonders vorteilhaft, da dies nur einen geringfügig größeren Implementierungsaufwand erfordert, jedoch aber die Funktionalität bzw. die Flexibilität dieser Mastereinheit 1 beträchtlich steigert.

Mastereinheiten 1 und Slave-Einheiten 2 kommunizieren miteinander über den Adreßbus 5 und über die Steuersignale auf den Steuerleitungen 10, 16, 17, 21 (vom Master zum Slave) sowie über das Steuersignal auf der Steuerleitung 13 (vom Slave zum Master).

Die maximale Adreßbusbreite hängt typischerweise vom Systemspeicher ab. Eine Mastereinheit 1 muß dabei mit allen Adreßleitungen des Adreßbusses 5 verbunden sein. Eine Slave-Einheit 2 muß hingegen nur mit diesen Adreßleitungen des Adreßbusses 5 verbunden sein, die er für die jeweils interne Decodierung des Adreßsignals benötigt. Im vorliegenden Beispiel braucht die Slave-Einheit 2 nur 4 Bits, d. h. vier Adreßleitungen, zur Decodierung des jeweiligen Adreßsignals.

Die maximale Datenbreite des Datenbuses wird bestimmt durch die maximale Größe des größten Datentyps, der über den Datenbus 6 während einer Datenübertragung übertragen werden soll. Typische Datentypen sind beispielsweise 1 Byte (8 Bit), 1 Halbwort (16 Bit), 1 Wort (32 Bit), 1 Doppelwort (64 Bit). Die minimale Datenbreite wird dabei bestimmt durch die Datengröße der zentrale Recheneinheit. Es ist auch möglich, insbesondere für den Datentransfer von kleinen Datenmengen beispielsweise zu Peripherieeinheiten, die Zahl der Datenleitungen des Datenbusses 6 zu diesen Slave-Einheiten 2 zu reduzieren. Jedoch muß die Reduzierung der Datenleitungen in der Adresse der angesprochenen Slave-Einheit 2 Rechnung getragen werden.

Eine Datenübertragung auf dem Datenbus 6 erfolgt immer zwischen einer Mastereinheit 1 und einer Slave-Einheit 2. Nach Zuteilung des Busses 3 durch die Bussteuereinheit 4 wählt die Mastereinheit 1 die zur Datenübertragung benötigte Slave-Einheit 2 über eine Adresse, welche auf dem Adreßbus 5 übertragen wird, aus. Die Decodierung dieser Adresse kann zentral über den Adreß-Decoder 24 in der Bussteuereinheit 4 oder dezentral in einem speziellen Adreß-Decoder in der Slave-Einheit 2 erfolgen. Jede als Slave-Einheit 2 adressierbare Einheit, d. h. möglicherweise auch eine Mastereinheit 1 (zum Beispiel eine sogenannte Master-Slave-Einheit), muß dazu ein Eingang zur Einkoppelung des Selektsignals für die Steuerleitung 22 vorsehen.

Der Bus 3 kann derart betrieben werden, daß die Adressen auf dem Adreßbus 5 im nicht-gemultiplexten Betrieb oder auf dem Adreßbus 5 und Datenbus 6 im gemultiplexten Betrieb übertragbar sind. Die Auswahl der Übertragung der Adressen im Multiblexbetrieb und oder im Demultiplexbetrieb wird typischerweise durch die Bussteuereinheit 4 oder der entsprechenden Mastereinheit 1 durchgeführt. Im vorliegenden Ausführungsbeispiel wird jedoch davon ausgegangen, daß der Bus 3 im Demultiplexbetrieb betrieben wird.

Die Bussteuereinheit 4 enthält typischerweise eine interne Arbitriereinrichtung 23 und einen Adreßdecoder 24. Es wäre jedoch auch denkbar, daß die Arbitriereinheit 23 und/oder Adreßdecoder 24 in einer der übergeordneten Mastereinheiten 1 oder Slave-Einheiten 2 angeordnet ist.

Der Bussteuereinheit 4 werden die Signale des Adreßbusses 5 sowie Steuersignale der Steuerleitungen 13, 14, 18 sowie das Taktsignal der Taktleitung 7 und ein Resetsignal der Resetleitung 8 zugeführt. Über über die Steuerleitungen 19, 20 steuert die Arbitriereinheit 23 die Zuteilung des Busses 3 (Arbitrierung). Hierzu ist die Bussteuereinheit 4 bzw. Arbitriereinheit 23 über jeweils ein Signalpaar der Steuerleitungen 19, 20 mit jeder der Mastereinheiten 1 verbunden.

Die Arbitriereinheit 23 weist zusätzliche eine Priorisierungslogik auf. Dies ist insbesondere bei einem Multi-Masterbussystem von großer Bedeutung. Die Priorisierungslogik in der Arbitriereinheit 23 entscheidet, welche Mastereinheit 1 mit welcher Priorität auf den Bus 3 zugreifen kann.

Zusätzlich kann die Bussteuereinheit 4 einen Time-out-Controller 25 und einen Reset-Controller 26 aufweisen.

Der Time-out-Controller 25 wird über das Ready-Signal der Steuerleitung 14 aktiviert. Über einen sogenannten Time-out-Mechanismus kann in bekannter Weise eine Busoperation der an einer Datenübertragung beteiligten Einheiten abgebrochen werden.

Über den Reset-Controller 26 können alle Adreß-, Daten- und Steuerleitungen 5, 6, 9...22 des Busses 3 auf einen vorgegebenen Wert gesetzt werden. Es wäre auch möglich, daß der Reset-Controller 26 in einer der Mastereinheiten 1 oder einer der Slave-Einheiten 2 angeordnet ist.

Zusätzlich kann das Bussystem Mittel zum Powermanagement 27 enthalten. Diese Mittel zum Powermanagement sind insbesondere bei Systemen, die auf eine lokale Spannungsversorgung, wie beispielsweise eine Batterie oder ein Akku, angewiesen sind, von besonderer Bedeutung. Die Mittel zum Powermanagement 28 können mehrere Betriebsmodi aufweisen. Der einfachste Betriebsmodus ist der Sleep-Modus. Im Sleep-Modus werden die Signalleitungen des Busses 3 einfach ausgeschaltet. Im vorliegenden Beispiel erfolgt das über die Bussteuereinheit 4. Eine weitere Möglichkeit ist der Slow-Down-Modus. Im Slow-Down-Modus wird die Leistungsaufnahme aller am Bussystem beteiligten Einheiten heruntergefahren und somit ein unerwünschtes Aufladen bzw. Entladen der Busleitungen verhindert. Insbesondere wird im Slow-Down-Modus die Frequenz, mit der die Bussignale ihren Zustand ändern, reduziert. Dies führt zu reduzierter Stromaufnahme. Die Spannung bleibt jedoch unverändert. Der Energieverbrauch wird in beiden Modi somit deutlich verringert.

Des Weiteren enthält das Bussystem einen Defaultmaster. Der Defaultmaster wird dabei typischerweise durch eine der Mastereinheiten 1 gebildet. Der Defaultmaster erhält den Buszugriff in dem Fall, daß kein anderer den Bus 3 anfordert. In diesem Fall sorgt der Defaultmaster dafür, daß entsprechende "Leertransfers" auf dem Bus 3 stattfinden. Dies dient unter anderem der Reduzierung der Stromaufnahme.

Das Bereitstellen eines Defaultmasters hat den Vorteil, daß im Falle einer später beabsichtigten Datenübertragung der Defaultmaster einen Datenübertragungstransfer ohne ein Request-Signal über die Steuerleitung 19 durchführen kann. Auf diese Weise kann ein ganzer Taktzyklus eingespart werden. Typischerweise wird als Defaultmaster beispielsweise die zentrale Recheneinheit (CPU) gewählt. Es wäre jedoch auch denkbar, daß die zuletzt an einer Datenübertragung beteiligte Mastereinheit 1 jeweils als Defaultmaster die Zugriffsberechtigung an dem Bus 3 behält.

Erfindungsgemäß läßt sich das neu vorgestellte Bussystem mittels zweier grundlegend neuen und unterschiedlichen Betriebsmodi betreiben. Im ersten Modus erfolgt die Datenübertragung in geteilten Blöcken (Split-Transfer), während beim zweiten Modus die Datenübertragung nicht in geteilten Blöcken (Non-Split-Transfer) entsprechend dem Stand der Technik erfolgt.

Beim Split-Transfer ist die Datenübertragung in zwei Transferblöcke, dem sogenannten Anforderungstransfer und dem sogenannten Antworttransfer, unterteilt. Bei dem Anforderungstransfer werden Informationen wie die Zieladresse, Datengröße, Masteridentifizierung (Master-ID) von einer Mastereinheit 1 zur adressierten Slaveeinheit 2 übermittelt. Dieser Anforderungsttransfer dauert typischerweise nur einen Taktzyklus. Der Anforderungstransfer und der Antworttransfer sind um mindestens einen Buszyklus getrennt.

In dieser Zwischenzeit sammelt die adressierte Slave-Einheit 2 intern die angeforderten Daten und bereitet sie für den Antworttransfer auf. In dieser Zwischenzeit zwischen Anforderungstransfer und Antworttransfer steht der Bus anderen am Bussystem beteiligen Einheiten wieder zur Verfügung. Das bedeutet, in dieser Zwischenzeit läßt sich mindestens ein weiterer Datentransfer durchführen.

Während des Antworttransfers übernimmt dann die adressierte Slaveeinheit 2 die Kontrolle auf den Bus 3 und fungiert somit als Master. Die Slaveeinheit 2 sendet dann als Master die angeforderten Daten zu der durch das TAG-Signal gekennzeichneten Mastereinheit 1, die den Transfer angefordert hat. Diese Mastereinheit 1 fungiert somit als Slave. Das TAG-Signal hat in diesem Fall die wesentliche Aufgabe, daß die empfangende Einheit den Antworttransfer auf dem Bus 3 als für sie bestimmt erkennen kann, da in der Zwischenzeit der Bus 3 freigegeben war und andere Mastereinheiten 1 Zugriff auf den Bus haben konnten.

Dieser Wechsel von Master und Slave sowie die Freigabe des Busses 3 in der Zwischenzeit zwischen dem Anforderungstransfer und dem entsprechenden Antworttransfer für weitere am Bussystem beteiligten Einheiten ist somit kennzeichnend für den Split-Transfer.

Der Antworttransfer der als Master fungierenden Slaveeinheit 2 kann jederzeit unterbrochen werden und zu einem späteren Zeitpunkt wieder fortgesetzt werden. Zu dem Zeitpunkt der Unterbrechung der Datenübertragung kann beispielsweise eine Datenübertragung von einer anderen Mastereinheit 1 und Slaveeinheit 2 erfolgen. Damit die Datenübertragung nach einer Unterbrechung wieder ordnungsgemäß fortgesetzt werden kann, muß sowohl die Mastereinheit 1 als auch die antwortende Slaveeinheit 2 eine Unterbrechung als solche erkennen können. Außerdem müssen beide Einheiten 1, 2 nachvollziehen können, welche der Daten schon gesendet wurden und welche noch nicht, so daß nach der Unterbrechung die Datenübertragung ohne weiteres am Ende des zuletzt gesendeten Datenblocks fortgesetzt werden kann. Das Ende einer Datenübertragung wird durch ein speziellen Code auf dem OPC-Bus 10 gekennzeichnet. Soll eine Datenübertragung nicht unterbrochen werden, kann sie auch jederzeit durch ein Lock-Signal gesperrt werden.

Es ist selbstverständlich auch denkbar, daß gleichzeitig mehrere Split-Transfer-Datenübertragungen offen sind, weil die entsprechenden Slave-Einheiten 2 die Daten parallel sammeln. Es ist auch vorstellbar, daß einzelne Slave-Einheiten 2 mehrere Splittransfers offen haben. Die Priorität für die Abarbeitung der einzelnen Splittransfers ist von mehreren Kriterien und den Systemanforderungen abhängig. Im vorliegenden Beispiel kann jede Slave-Einheit 2 nur einen Splittransfer offen haben. Die Priorität ist so festgelegt, daß die erste Anforderung auch zuerst bearbeitet wird. Es sind auch Methoden vorhanden, um die Abarbeitung von offenen Splittransfers abzubrechen oder mit neuen Konditionen zu starten.

Eine weitere Möglichkeit dafür, daß eine Datenübertragung nicht stattfinden bzw. nicht fortgesetzt werden kann, ist beispielsweise daß die adressierte Slaveeinheit 2 gesperrt ist oder das entsprechende Register die Daten nicht in der gewünschten Geschwindigkeit liefern kann. Typischerweise, jedoch nicht notwendigerweise, hat jeweils eine Mastereinheit und jeweils Slaveeinheit 2 nur einen einzigen geteilten Datentransfer in Bearbeitung.

Im Non-Split-Transfer kann die Datenübertragung beispielsweise in Blöcken definierter Länge oder in einzelnen Transfers durchgeführt werden. In beiden Fällen wird eine dynamische Anzahl von Wartezyklen (Wait-States) unterstützt. Das neue Bussystem wird mit den unterschiedlichen Betriebsmodi vorzugsweise ergänzend betrieben. Die unterschiedlichen Verfahren zum Betreiben des Bussystems können dabei allein für sich oder wechselweise je nach Anforderungen das Bussystem betrieben. Auf diese Weise erhält das neue Bussystem eine höchstmögliche Flexibilität.

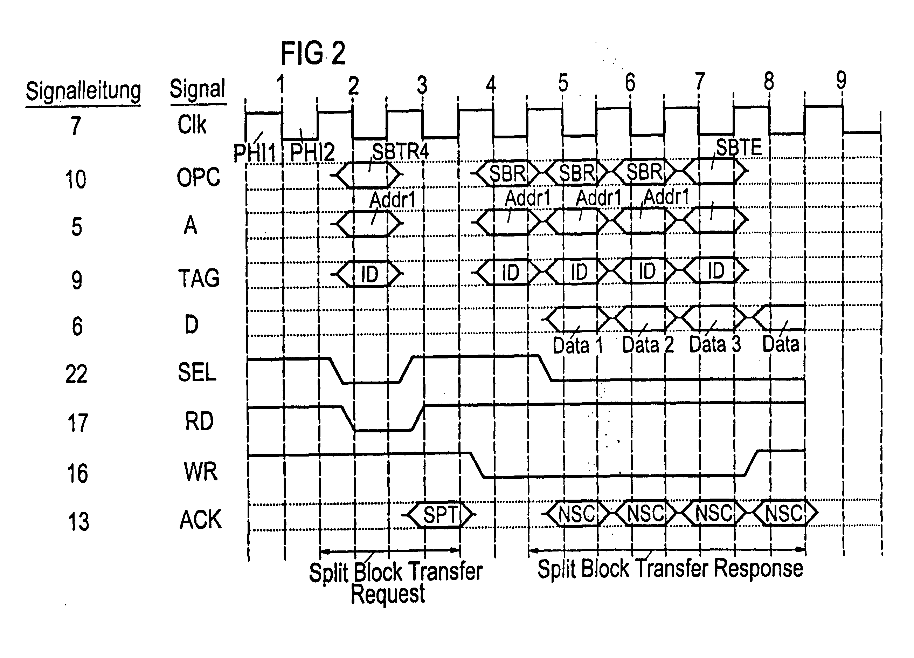

Die erfindungsgemäße Datenübertragung mittels Split-Transfer und Non-Split-Transfer wird nachfolgend anhand eines Signal-Zeit-Diagrams näher erläutert. In Figur 2 ist der zeitliche Verlauf verschiedener Signale für eine Datenübertragung im Split-Transfer dargestellt.

Figur 2 zeigt die Übertragung von vier zusammenhängenden Dateneinheiten (32 Bit) von einer Slave-Einheit 2 zu einer Mastereinheit 1. Als Referenz für das Timing auf dem Bus 3 dient das Taktsignal CLK auf der Taktsignalleitung 7. Vor und nach einer Datenübertragung auf dem Bus 3, d. h. im ersten Taktzyklus und im neunten Taktzyklus, befindet sich der Bus 3 im Wartezustand.

Im zweiten Taktzyklus weist die Bussteuereinheit 4 der Mastereinheit 1 den Bus 3 zu. Die Mastereinheit 1 beginnt mit der Datenübertragung und treibt verschiedene Steuersignale auf den Steuerleitungen 9, 10, 16, 17, 21 und den Adreßbus 5. Während dem zweiten Taktzyklus wird die Adreßinformation auf dem Adreßbus 5 zentral in der Slave-Einheit 2 oder dezentral in der Bussteuereinheit 4 bzw. in dessen Adreßdecoder 24 decodiert. Über die Steuerleitungen 10 wird über das OPC-Signal (SBTR4 = Split-Block-Transfer-Request (4 Transfers)) an eine Slaveeinheit (Addr 1) die Anforderung eines Split-Transfer in 4 Blöcken gesendet. Die Mastereinheit 1 wird durch ein TAG-Signal (ID) gekennzeichnet. Danach wird der Bus 3 für den dritten Taktzyklus wieder freigegeben.

Im dritten Taktzyklus bestätigt die adressierte Slaveeinheit 2 durch ein ACK-Signal (SPT = Split Transfer) auf der Steuerleitung 13 die Anforderung der Mastereinheit 1 für eine gesplitteten Datenübertragung.

Im vierten Taktzyklus fungiert nun die für die Split-Transfer angeforderte Slaveeinheit 2 als Master. Dies setzt jedoch nicht zwingend voraus, daß diese Slaveeinheit 2 schon über die angeforderte Datenmenge verfügt. Mit Beginn des vierten Taktzyklus beginnt die Slave-Einheit 2 den Adreßbus 5 sowie die Signale auf den entsprechenden Steuerleitungen 10, 11, 12 16 treiben. Die Daten werden entsprechend der Pipeline-Architektur um einen Zyklus versetzt getrieben. Es handelt sich somit um mehrere aufeinanderfolgende Schreibvorgänge. Die Slaveeinheit 2 beginnt dann den Antworttransfer über das OPC-Signal (SBR = Split-Block-Response), das der entsprechenden gekennzeichneten Mastereinheit 1 anzeigt, daß gleich die Datenantwort gesendet wird. Die Mastereinheit 1 ist dabei über das TAG-Signal (ID) gekennzeichnet. Gleichzeitig wird die Steuerleitung 16 mit dem Write-Signal aktiv gesetzt.

Es wäre auch möglich, daß der Antworttransfer der sendenden Slaveeinheit 2 zu einem späteren Zeitpunkt stattfindet, wenn beispielsweise vorher noch ein höher priorisierter Datentransfer abgewickelt werden soll.

Im fünften und sechsten Taktzyklus werden die ersten beiden Datenblöcke (Data 1, Data 2) über die Datenleitungen 6 gesendet. Die sendende Slaveeinheit 2 muß dabei jedoch noch nicht über die gesamte zu sendende Datenmenge verfügen. Zu diesem Zeitpunkt müssen lediglich die ersten beiden Datenblöcke im Schreibregister der Slaveeinheit sein. Über das ACK-Signal (NSC = No Special Condition) bestätigt die empfangende Mastereinheit 1 den korrekten Erhalt der Daten oder signalisierten Fehlerzustände.

Im siebten Taktzyklus wird der dritte Datenblock (Data 3) gesendet. Gleichzeit beendet die Slaveeinheit 2 über ein OPC-Signal (SBRE = Split-Block-Response-End) den Antworttransfer an die frühere Mastereinheit 1. Dieses Signal bezeichnet den letzten Transfer des Antwort-Transfers. Die Daten im folgenden Buszyklus sind also die letzten, die gesendet werden.

Im achten Taktzyklus wird der vierte und letzte Datenblock (Data 4) übertragen und der Bus 3 wird im neunten Taktzyklus wieder freigegeben.

In Figur 2 ist das Pipelining-System besonders gut zu erkennen. Im vierten Taktzyklus wird die Adresse sowie die Signale auf den Steuerleitungen 9, 10, 16, 17 ausgegeben. Die Datenübertragung für diesen Zyklus erfolgt einen Taktzyklus später.

In Figur 2 fordert die Mastereinheit 1 eine Datenübertragung mit Split-Transfer an. Es wäre jedoch auch denkbar, daß die adressierte Slaveeinheit 2 die Datenübertragung im Split-Transfer ablehnt und in eine Datenübertragung von mehreren einzelnen Datentransfers umwandelt. Dies erfolgt über den entsprechenden ACK-Code.

Eine weitere Möglichkeit ergibt sich, wenn die Mastereinheit 1 eine Datenübertragung im Non-Split-Transfer anfordert und die adressierte Slaveeinheit 2 jedoch diesen Non-Split-Transfer ablehnt und eine Datenübertragung im Split-Transfer festlegt.

Schließlich ist es auch möglich, daß die Mastereinheit 1 über ein spezielles Steuerbit (No-Split-Signal) auf der Steuerleitung 15 eine Datenübertragung im Non-Split-Transfer erzwingt. Weiterhin hat die Slave-Einheit 2 die Möglichkeit, diese Transfers aufgrund anderer Prioritäten abzulehnen.

Um diesen Anforderungen nachkommen zu können, müssen die erfindungsgemäßen Mastereinheiten 1 und Slave-Einheiten 2 eine Logikschaltung 28 aufweisen. Diese Logikschaltung 28 kann eine Datenübertragung im Split-Transfer oder im Non-Split-Transfer anfordern, ablehnen und auswählen. Diese Logikschaltung 28 enthält außerdem Mittel zur zeitlichen Steuerung der Datenübertragung.

Im vorliegenden Ausführungsbeispiel weisen die untergeordneten Einheiten 2 eine Pufferspeichereinrichtung 29 auf. Die Puffergröße sollte dabei so groß gewählt sein, daß die Datenantworttransfers mit optimaler Geschwindigkeit abgehandelt werden können.

Die Pufferspeichereinrichtung 29 ist dann notwendig wenn eine Datenübertragung während des Datentransfers durch das Abort-Signal abgebrochen wird. Nach dem Abbruch müssen die vorhergehenden Daten wieder verfügbar sein.

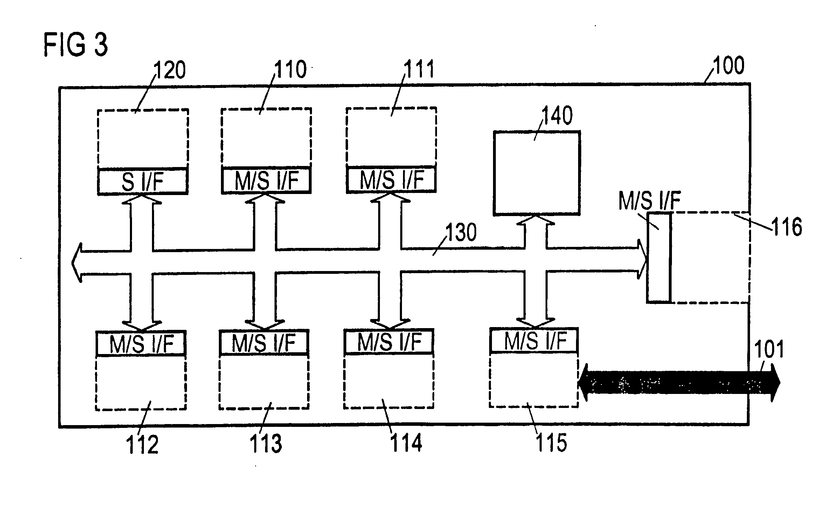

Figur 3 zeigt ein Beispiel für eine vorteilhafte Implementierung des erfindungsgemäßen Bussystems.

Das erfindungsgemäße Bussystem ist hier als sogenanntes System-On-Chip auf einem Halbleiterbauelement 100 implementiert. Mit 130 ist in Figur 3 der Bus bezeichnet. An dem Bus 130 sind insgesamt sieben Mastereinheiten 110...116 und eine Slave-Einheit 120 angeschlossen. Die Slave-Einheit 120 ist hier durch eine Peripherieeinheit realisiert. Die Mastereinheiten 110 ... 116 sind im vorliegenden Beispiel als Master-Slave-Einheiten ausgebildet und weisen jeweils eine Master-Slave-Schnittstelle M/S I/F auf.

Im vorliegenden Beispiel ist die erste Mastereinheit 110 eine Speichereinheit. Die Mastereinheit 111 ist eine Prozessoreinheit, beispielsweise eine zentrale Recheneinheit (CPU) bzw. ein Riscprozessor. Die Mastereinheit 112 ist eine weitere Prozessoreinheit, beispielsweise kann diese Prozessoreinheit durch einen Co-Prozessor ausgebildet sein. Die Mastereinheit 113 ist eine Peripherieeinheit. Die Mastereinheit 114 ist hier eine DMA-Einheit (Direct-Memory-Access). Die Mastereinheit 115 ist eine Busbrückeneinheit, die hier an einen externen Bus 101 angeschlossen ist. Die Mastereinheit 116 stellt eine externe Bussteuereinheit dar. Die externe Bussteuereinheit 116 bildet somit die Schnittstelle zwischen internem Bus 130 und einem externen angeschlossenen Bus, der hier nicht dargestellt ist. Die Steuerung der Datenübertragung über den Bus 130 sowie die Steuerung und Arbitrierung der an dem Bus 130 angeschlossenen Einheiten 110...116, 120 wird durch eine Bussteuereinheit 140 durchgeführt.

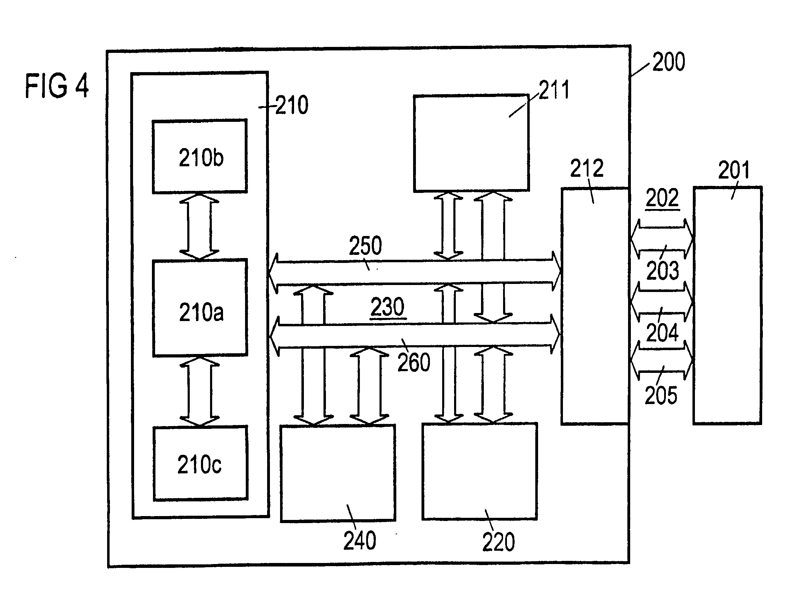

Figur 4 zeigt ein weiteres vorteilhaftes Ausführungsbeispiel für die Implementierung des erfindungsgemäßen Bussystems.

Mit 200 ist hier eine integrierte Schaltung bezeichnet. Die integrierte Schaltung 200 enthält einen Bus 230. Der Bus 230 enthält einen Adreßbus 250 und einen Datenbus 260. Die übrigen Steuerleitungen des Busses 230 sind hier nur schematisch dargestellt und nicht weiter beziffert. Im Beispiel von Figur 4 sind an dem Bus 230 drei Mastereinheiten 210...212 sowie eine Slave-Einheit 220 angeschlossen. Die Slave-Einheit 220 ist hier durch eine Peripherieeinheit ausgebildet.

Die Mastereinheit 210 wird durch die zentrale Recheneinheit gebildet. Die zentrale Recheneinheit enthält eine Core-Einrichtung 210a. An der Core-Einrichtung 210a sind über bidirektional betriebenen Signalleitungen ein Adreßregister 210b und ein Datenregister 210c angeschlossen. Die Mastereinheit 211 ist eine Speichereinrichtung, die beispielsweise durch einen On-Chip-Memory bzw. einen sogenannter Embedded-Speicher ausgebildet sein kann. Diese Speichereinrichtung 211 kann als RAM, ROM, SRAM, etc. ausgebildet sein. Es wäre auch denkbar, daß der Speicher 211 als Pufferspeichereinrichtung ausgebildet ist. Die Mastereinheit 212 ist als externer Buscontroller ausgebildet.

Die Bussteuerung des intern ausgebildeten Busses 230 wird durch die Bussteuereinheit 240 ausgeführt. Die externe Bussteuereinheit 212 bildet die Schnittstelle zwischen internen Bus 230 und einem externen Bus 202. Der externe Bus 202 weist einen Adreßbus 203, einen Datenbus 204 sowie einen Steuerbus 205 auf. Der externe Bus kann das Halbleiterbauelement 200 an externe Einheiten, wie beispielsweise einen externen Speicher 201 oder ähnlichem anschließen.

Besonders vorteilhaft ist die Erfindung bei Verwendung in einem Mikroprozessor oder Microcomputer.

## Patentansprüche

1. Verfahren zum Betreiben eines Bussystems bestehend aus
(1) mindestens einer übergeordneten Einheit (1),
(2) mindestens einer untergeordneten Einheit (2),
(3) einem Bus (3) zwischen der übergeordneten Einheit (1) und der untergeordneten Einheit (2) mit mindestens einem Adreßbus (5), mindestens einem Datenbus (6) und mindestens einer Steuerleitung (9..22) und
(4) mindestens einer den Bus (3) steuerenden Bussteuereinheit (4), die zumindest eine Datenübertragung zwischen einer dem Bus zugeteilten übergeordneten Einheit (1) und der von dieser übergeordneten Einheit (1) adressierten untergeordneten Einheit (2) steuert,
(5) wobei die Datenübertragung in einer ersten Konfiguration oder in einer zweiten Konfiguration durchgeführt wird, und
(a) in der ersten Konfiguration die Datenübertragung aufgeteilt wird in einen Anforderungsdatentransfer und in einen Antwortdatentransfer, und in der Zeit zwischen Anforderungsdatentransfer und Antwortdatentransfer der Bus (3) freigegeben wird für die Datenübertragungen weiterer übergeordneter Einheiten (1) und untergeordneter Einheiten (2), und
(b) in der zweiten Konfiguration der Bus (3) zwischen Anforderungsdatentransfer und Antwortdatentransfer nicht freigegeben ist,
wobei über ein Steuersignal auf mindestens einer der Steuerleitungen (10) der Modus, in dem die übergeordnete Einheit auf den Bus (3) zugreift, festgelegt wird,
**dadurch gekennzeichnet,**
**daß** über ein zweites Konfigurationssignal auf mindestens einer der Steuerleitungen (10) die untergeordnete Einheit (2) den von der übergeordneten Einheit (1) festgelegten Datentransfer in der ersten Konfiguration oder in der zweiten Konfiguration ablehnt und den Datentransfer in der zweiten bzw. in der ersten Konfiguration ausführt.

2. Verfahren nach Anspruch 1,
**dadurch gekennzeichnet, daß**
(a1) für den Anforderungsdatentransfer in der ersten Konfiguration die für den Buszugriff zugeteilte übergeordnete Einheit (1) als Master eine untergeordnete Einheit (2) adressiert und von dieser adressierten untergeordneten Einheit (2) einen Datentransfer anfordert, und daß
(a2) für den Antwortdatentransfer in der ersten Konfiguration die adressierte untergeordnete Einheit (2) zumindest teilweise die für den Antwortdatentransfer vorgesehene Datenmenge sammelt und die gesammelte Datenmenge dann als Master an die übergeordnete Einheit (1) sendet, die den Datentransfer angefordert hat.

3. Verfahren nach einem der vorhergehenden Ansprüche,
**dadurch gekennzeichnet,**
**daß** über ein erstes Konfigurationssignal auf mindestens einer der Steuerleitungen (10) die übergeordnete Einheit (1) festlegt, daß die Datenübertragung in der ersten Konfiguration durchgeführt wird.

4. Verfahren nach einem der vorhergehenden Ansprüche,
**dadurch gekennzeichnet,**
**daß** über ein drittes Konfigurationssignal auf mindestens einer der Steuerleitungen (15) die übergeordnete Einheit (1) ein Datentransfer in der ersten Konfiguration oder in der zweiten Konfiguration erzwingt.

5. Verfahren nach einem der vorhergehenden Ansprüche,
**dadurch gekennzeichnet,**
**daß** von jeder der übergeordneten Einheiten (1) jeweils maximal eine Datenübertragung gleichzeitig durchgeführt wird.

6. Verfahren nach einem der vorhergehenden Ansprüche,
**dadurch gekennzeichnet, daß**
über die Bussteuereinheit (4) die Zuteilung des Busses (3) an eine der übergeordneten Einheiten (1) gesteuert wird.

7. Verfahren nach einem der vorhergehenden Ansprüche,
**dadurch gekennzeichnet,**
**daß** die Datenübertragung in der zweiten Konfiguration über Wartezyklen stattfindet.

8. Verfahren nach einem der vorhergehenden Ansprüche,
**dadurch gekennzeichnet,**
**daß** die Busoperationen von Adreßzyklus und Datenzyklus im Pipelining-Verfahren abgearbeitet werden.

9. Verfahren nach einem der vorhergehenden Ansprüche,
**dadurch gekennzeichnet,**
**daß** über ein Protection-Bit auf mindestens einer der Steuerleitungen (16, 17) eine an einer Datenübertragung beteiligte untergeordnete Einheit (2) verhindert werden kann, daß während eines Lesezugriffs gleichzeitig ein Schreibzugriff auf das entsprechende Register dieser untergeordneten Einheit (2) erfolgt.

10. Verfahren nach einem der vorhergehenden Ansprüche,
**dadurch gekennzeichnet,**
**daß** über ein weiteres Steuersignal auf mindestens einer der Steuerleitungen (10) die übertragene Datenbreite festgelegt wird.

11. Verfahren nach einem der vorhergehenden Ansprüche,
**dadurch gekennzeichnet,**
**daß** über ein Quittiersignal auf mindestens einer der Steuerleitungen (13) von der untergeordneten Einheit (2) eine Datenübertragung quittiert wird.

12. Verfahren nach einem der vorhergehenden Ansprüche,
**dadurch gekennzeichnet,**
**daß** über ein erstes Statussignal auf mindestens einer der Steuerleitungen (13) von der untergeordneten Einheit (2) angezeigt wird, ob Daten zur Verarbeitung bereitstehen oder ob Daten gerade verarbeitet werden.

13. Verfahren nach einem der vorhergehenden Ansprüche,
**dadurch gekennzeichnet,**
**daß** über ein zweites Statussignal auf mindestens einer der Steuerleitungen (13) von der untergeordneten Einheit (2) angezeigt wird, ob Wartezyklen eingefügt werden und/oder wieviel Wartezyklen eingefügt werden.

14. Verfahren nach einem der vorhergehenden Ansprüche,
**dadurch gekennzeichnet,**
**daß** über ein drittes Statussignal auf mindestens einer der Steuerleitungen (12) von der untergeordneten Einheit (2) angezeigt wird, ob aufeinanderfolgende Buszyklen ohne Unterbrechung durchgeführt wurden oder ob Fehlerzustände aufgetreten sind.

15. Verfahren nach einem der vorhergehenden Ansprüche,
**dadurch gekennzeichnet,**
**daß** über ein Abbruchsignal auf mindestens einer der Steuerleitungen (11) von der Bussteuereinheit (4) nach einer vorbestimmten Zeit eine Datenübertragung abgebrochen wird.

16. Verfahren nach einem der vorhergehenden Ansprüche,
**dadurch gekennzeichnet,**
**daß** jeweils über ein Anforderungssignal und ein Zuteilungssignal auf mindestens einer der Steuerleitungen (19, 20) von der Bussteuereinheit (4) die Zuteilung der übergeordneten Einheiten (1) an den Bus (3) festgelegt wird.

17. Schaltungsanordnung bestehend aus,
(1) mindestens einer übergeordneten Einheit (1),
(2) mindestens einer untergeordneten Einheit (2),
(3) einem Bus (3) zwischen der übergeordneten Einheit (1) und der untergeordneten Einheit (2) mit mindestens einem Adreßbus (5), mindestens einem Datenbus (6) und mindestens einer Steuerleitung (9..22) und
(4) mindestens einer den Bus (3) steuerenden Bussteuereinheit (4), die zumindest die Datenübertragung zwischen einer dem Bus zugeteilten übergeordneten Einheit (1) und der von dieser übergeordneten Einheit (1) adressierten untergeordneten Einheit (2) steuert,
(5) wobei die Datenübertragung in der ersten Konfiguration oder in der zweiten Konfiguration durchführbar ist, und(a) in der ersten Konfiguration die Datenübertragung aufgeteilt ist in einen Anforderungsdatentransfer und in einen Antwortdatentransfer, und in der Zeit zwischen Anforderungsdatentransfer und Antwortdatentransfer der Bus (3) freigegeben ist für die Datenübertragungen weiterer übergeordneter Einheiten (1) und untergeordneter Einheiten (2), und (b) in der zweiten Konfiguration der Bus (3) zwischen Anforderungsdatentransfer und Antwortdatentransfer nicht freigegeben ist,
wobei über ein Steuersignal auf mindestens einer der Steuerleitungen (10) der Modus, in dem die übergeordnete Einheit auf den Bus (3) zugreift, festgelegt wird, **dadurch gekennzeichnet,**
**daß** über ein zweites Konfigurationssignal auf mindestens einer der Steuerleitungen (10) die untergeordnete Einheit (2) den von der übergeordneten Einheit (1) festgelegten Datentransfer in der ersten Konfiguration oder in der zweiten Konfiguration ablehnt und den Datentransfer in der zweiten bzw. in der ersten Konfiguration ausführt.

18. Schaltungsanordnung nach Anspruch 17,
**dadurch gekennzeichnet,**
**daß** mindestens eine der am Bussystem beteiligten Einheiten (1, 2) eine Logikschaltung (28) zum Anfordern, Ablehnen und Auswählen der Datenübertragung in der ersten Konfiguration oder in der zweiten Konfiguration aufweist.

19. Schaltungsanordnung nach Anspruch 17 oder 18,
**dadurch gekennzeichnet,**
**daß** für eine Datenübertragung in der ersten Konfiguration sowohl die zugeteilte übergeordnete Einheit (1) als die adressierte untergeordnete Einheit (2) Mittel zur zeitlichen Steuerung der Datenübertragung aufweist.

20. Schaltungsanordnung nach einem der Ansprüche 17 bis 19,
**dadurch gekennzeichnet,**
**daß** die untergeordnete Einheit (2) mindestens eine Pufferspeichereinrichtung (29) enthält.

21. Schaltungsanordnung nach Anspruch 20,
**dadurch gekennzeichnet,**
**daß** die Speichergröße der Pufferspeichereinrichtung (29) mindestens so groß ist, um einen Transfers mit optimaler Geschwindigkeit abzuhandeln.

22. Schaltungsanordnung nach einem der Ansprüche 17 bis 21,
**dadurch gekennzeichnet,**
**daß** mindestens zwei übergeordnete Einheiten (1) vorgesehen sind und daß die Bussteuereinheit (4) Mittel zur Priorisierung (23) der übergeordneten Einheiten (1) aufweist, wobei die Mittel zur Priorisierung (23) die Priorität der auf den Bus (3) zugreifenden übergeordneten Einheiten (1) festlegen.

23. Schaltungsanordnung nach einem der Ansprüche 17 bis 22,
**dadurch gekennzeichnet,**
**daß** mindestens eine der übergeordneten Einheiten (1) eine Master-/Slave-Schnittstelle aufweist.

24. Schaltungsanordnung nach einem der Ansprüche 17 bis 23,
**dadurch gekennzeichnet,**
**daß** der Bus (3) derart betreibbar ist, daß die Adressen im nicht-gemultiplexten Betrieb auf dem Adreßbus (5) oder im gemultiplexten Betrieb auf dem Adreßbus (5) und Datenbus (6) übertragbar sind.

25. Schaltungsanordnung nach einem der Ansprüche 17 bis 24,
**dadurch gekennzeichnet,**
**daß** mindestens eine zentrale Recheneinheit als übergeordnete Einheit (1) vorgesehen ist.

26. Schaltungsanordnung nach einem der Ansprüche 17 bis 25,
**dadurch gekennzeichnet,**
**daß** eine der übergeordneten Einheiten (1) als Defaultmaster vorgesehen ist, wobei der Defaultmaster für den Fall, daß keine andere übergeordnete Einheit den Bus (3) anfordert, die Zuteilung an den Bus erhält.

27. Schaltungsanordnung nach einem der Ansprüche 17 bis 26,
**dadurch gekennzeichnet,**
**daß** die Schaltungsanordnung Bestandteil eines Mikroprozessors oder eines Mikrocomputers ist.

## Claims

1. Method of operating a bus system comprising
(1) at least one primary unit (1),
(2) at least one secondary unit (2),
(3) a bus (3) between the primary unit (1) and the secondary unit (2) having at least one address bus (5), at least one data bus (6) and at least one control line (9..22) and
(4) at least one bus control unit (4) controlling the bus (3) and controlling at least one data transmission between a primary unit (1), allocated to the bus, and the secondary unit (2) addressed by this primary unit (1),
(5) the data transmission being carried out in a first configuration or in a second configuration,
and
(a) in the first configuration, the data transmission being split into a request data transfer and a response data transfer, and, in the time between the request data transfer and the response data transfer, the bus (3) being cleared for the data transmissions of other primary units (1) and second units (2), and
(b) in the second configuration, the bus (3) not being cleared between the request data transfer and the response data transfer,
a control signal on at least one of the control lines (10) being used to specify the mode in which the primary unit accesses the bus (3), **characterized in that**, by means of a second configuration signal on at least one of the control lines (10), the secondary unit (2) rejects the data transfer, specified by the primary unit (1), in the first configuration or in the second configuration and performs the data transfer in the second and/or in the first configuration.

2. Method according to Claim 1, **characterized in that**
(a1) for the request data transfer in the first configuration, the primary unit (1) allocated for bus access addresses a secondary unit (2) as a master and requests a data transfer from this addressed secondary unit (2), and
(a2) for the response data transfer in the first configuration, the addressed secondary unit (2) at least partially collects the data set intended for the response data transfer and then sends, as a master, the data set collected to the primary unit (1) which has requested the data transfer.

3. Method according to one of the preceding claims, **characterized in that**, by means of a first configuration signal on at least one of the control lines (10), the primary unit (1) specifies that the data transmission is carried out in the first configuration.

4. Method according to one of the preceding claims, **characterized in that**, by means of a third configuration signal on at least one of the control lines (15), the primary unit (1) enforces a data transfer in the first configuration or in the second configuration.

5. Method according to one of the preceding claims, **characterized in that** each of the primary units (1) carries out a maximum of one data transmission at the same time in each case.

6. Method according to one of the preceding claims, **characterized in that** the bus control unit (4) controls the allocation of the bus (3) to one of the primary units (1).

7. Method according to one of the preceding claims, **characterized in that** the data transmission takes place in the second configuration during wait states.

8. Method according to one of the preceding claims, **characterized in that** the bus operations of the address cycle and the data cycle are processed using the pipelining method.

9. Method according to one of the preceding claims, **characterized in that** a protection bit on at least one of the control lines (16, 17) can be used by a secondary unit (2) involved in a data transmission to prevent write access to the corresponding register of this secondary unit (2) occurring at the same time as read access is occurring.

10. Method according to one of the preceding claims, **characterized in that** a further control signal on at least one of the control lines (10) is used to specify the data length transmitted.

11. Method according to one of the preceding claims, **characterized in that** an acknowledge signal on at least one of the control lines (13) is used by the secondary unit (2) to acknowledge a data transmission.

12. Method according to one of the preceding claims, **characterized in that** a first status signal on at least one of the control lines (13) is used by the secondary unit (2) to indicate whether data are available for processing or whether data are currently being processed.

13. Method according to one of the preceding claims, **characterized in that** a second status signal on at least one of the control lines (13) is used by the secondary unit (2) to indicate whether any wait states are being inserted and/or how many wait states are being inserted.

14. Method according to one of the preceding claims, **characterized in that** a third status signal on at least one of the control lines (12) is used by the secondary unit (2) to indicate whether successive bus cycles have been carried out without interruption or whether any error states have occurred.

15. Method according to one of the preceding claims, **characterized in that** an abort signal on at least one of the control lines (11) is used by the bus control unit (4) to abort a data transmission after a predetermined time.

16. Method according to one of the preceding claims, **characterized in that** in a request signal and a grant signal on at least one of the control lines (19, 20) are in each case and by the bus control unit (4) to specify the allocation of the primary units (1) to the bus (3).

17. Circuit arrangement comprising
(1) at least one primary unit (1),
(2) at least one secondary unit (2),
(3) a bus (3) between the primary unit (1) and the secondary unit (2) having at least one address bus (5), at least one data bus (6) and at least one control line (9..22) and
(4) at least one bus control unit (4) controlling the bus (3) and controlling at least the data transmission between a primary unit (1), allocated to the bus, and the secondary unit (2) addressed by this primary unit (1),
(5) it being possible for the data transmission to be carried out in the first configuration or in the second configuration, and (a) in the first configuration, the data transmission being split into a request data transfer and a response data transfer, and, in the time between the request data transfer and the response data transfer, the bus (3) being cleared for the data transmissions of other primary units (1) and second units (2), and
(b) in the second configuration, the bus (3) not being cleared between the request data transfer and the response data transfer,
a control signal on at least one of the control lines (10) being used to specify the mode in which the primary unit accesses the bus (3), **characterized in that**, by means of a second configuration signal on at least one of the control lines (10), the secondary unit (2) rejects the data transfer, specified by the primary unit (1), in the first configuration or in the second configuration and performs the data transfer in the second and/or in the first configuration.

18. Circuit arrangement according to Claim 17, **characterized in that** at least one of the units (1, 2) linked to the bus system has a logic circuit (28) for requesting, rejecting and selecting the data transmission in the first configuration or in the second configuration.

19. Circuit arrangement according to Claim 17 or 18, **characterized in that**, for a data transmission in the first configuration, both the allocated primary unit (1) and the addressed secondary unit (2) have means for timing the data transmission.

20. Circuit arrangement according to one of Claims 17 to 19, **characterized in that** the secondary unit (2) contains at least one buffer memory device (29).

21. Circuit arrangement according to Claim 20, **characterized in that** the memory size of the buffer memory device (29) is at least large enough to deal with a transfer at an optimum rate.

22. Circuit arrangement according to one of Claims 17 to 21, **characterized in that** at least two primary units (1) are provided and the bus control unit (4) has means for prioritizing (23) the primary units (1), the means for prioritizing (23) specifying the priority of the primary units (1) accessing the bus (3).

23. Circuit arrangement according to one of Claims 17 to 22, **characterized in that** at least one of the primary units (1) has a master/slave interface.

24. Circuit arrangement according to one of Claims 17 to 23, **characterized in that** the bus (3) can be operated in such a way that the addresses can be transmitted on the address bus (5) in non-multiplexed mode or on the address bus (5) and data bus (6) in multiplexed mode.

25. Circuit arrangement according to one of Claims 17 to 24, **characterized in that** at least one central processing unit is provided as a primary unit (1).

26. Circuit arrangement according to one of Claims 17 to 25, **characterized in that** one of the primary units (1) is provided as a default master, the default master being allocated to the bus if no other primary unit is requesting the bus (3).

27. Circuit arrangement according to one of Claims 17 to 26, **characterized in that** the circuit arrangement is a component of a microprocessor or a microcomputer.

## Revendications

1. Procédé pour faire fonctionner un système de bus, constitué de
(1) au moins une unité (1) supérieure hiérarchiquement,
(2) au moins une unité (2) subordonnée hiérarchiquement,
(3) un bus (3) entre l'unité (1) supérieure hiérarchiquement et l'unité (2) subordonnée hiérarchiquement, ayant au moins un bus (5) d'adresse, au moins un bus (6) de données et au moins une ligne (9..22) de commande et
(4) au moins une unité (4) de commande de bus, qui commande le bus (3) et qui commande au moins une transmission de données entre une unité (1) supérieure hiérarchiquement affectée au bus et l'unité (2) subordonnée hiérarchiquement adressée par cette unité (1) supérieure hiérarchiquement,
(5) dans lequel on effectue la transmission de données dans une première configuration ou dans une deuxième configuration, et
(a) dans la première configuration, on subdivise la transmission de données en un transfert de données de demande et en un transfert de données de réponse et, dans le temps entre le transfert de données de demande et le transfert de données de réponse, on libère le bus (3) pour la transmission de données d'autres unités (1) supérieures hiérarchiquement et d'autres unités (2) subordonnées hiérarchiquement, et
(b) dans la deuxième configuration, on ne libère pas le bus (3) entre un transfert de données de demande et un transfert de données de réponse,
dans lequel on fixe par un signal de commande sur au moins l'une des lignes (10) de commande le mode dans lequel l'unité supérieure hiérarchiquement accède au bus (3),
**caractérisé**
**en ce que**, par un deuxième signal de configuration sur au moins l'une des lignes (10) de commande, l'unité (2) subordonnée hiérarchiquement décline le transfert de données fixé par l'unité (1) supérieure hiérarchiquement dans la première configuration ou dans la deuxième configuration et exécute le transfert de données dans la deuxième configuration ou dans la première configuration.

2. Procédé suivant la revendication 1,
**caractérisé en ce que**
(a1) pour le transfert de données de demande dans la première configuration, l'unité (1) supérieure hiérarchiquement affectée à l'accès au bus adresse comme maître une unité (2) subordonnée hiérarchiquement et demande à cette unité (2) adressée subordonnée hiérarchiquement d'effectuer un transfert de données, et **en ce que**
(a2) pour le transfert de mots de réponse dans la première configuration, l'unité (2) adressée subordonnée hiérarchiquement rassemble au moins en partie l'ensemble de données prévu pour le transfert de données de réponse et envoie l'ensemble de données rassemblé alors comme maître à l'unité (1) supérieure hiérarchiquement, qui a demandé le transfert de données.

3. Procédé suivant l'une des revendications précédentes,
**caractérisé**
**en ce que**, par un premier signal de configuration sur au moins l'une des lignes (10) de commande, l'unité (1) supérieure hiérarchiquement fixe que le transfert de données est effectué dans la première configuration.

4. Procédé suivant l'une des revendications précédentes,
**caractérisé**
**en ce que**, par un troisième signal de configuration sur au moins l'une des lignes (15) de commande, l'unité (1) supérieure hiérarchiquement force un transfert de données dans la première configuration ou dans la deuxième configuration.

5. Procédé suivant l'une des revendications précédentes,
**caractérisé**
**en ce que**, respectivement, au maximum un transfert de données est effectué simultanément par chacune des unités (1) supérieures hiérarchiquement.

6. Procédé suivant l'une des revendications précédentes,
**caractérisé**
**en ce qu'**on commande, par l'unité (4) de commande de bus, l'affectation du bus (3) à l'une des unités (1) supérieures hiérarchiquement.

7. Procédé suivant l'une des revendications précédentes,
**caractérisé**
**en ce que** le transfert de données a lieu dans la deuxième configuration pendant des cycles d'attente.

8. Procédé suivant l'une des revendications précédentes,
**caractérisé**
**en ce que** les opérations de bus de cycle d'adresses et de cycle de données sont élaborées dans le procédé pipelining.

9. Procédé suivant l'une des revendications précédentes,
**caractérisé**
**en ce que**, par un bit de protection sur au moins l'une des lignes (16, 17) de commande, on peut empêcher que, pour une unité (2) subordonnée hiérarchiquement participant à un transfert de données, il s'effectue pendant un accès en lecture en même temps un accès en écriture au registre correspondant de cette unité (2) subordonnée hiérarchiquement.

10. Procédé suivant l'une des revendications précédentes,
**caractérisé**
**en ce que**, par un autre signal de commande sur au moins l'une des lignes (10) de commande, on fixe la largeur de données transmise.

11. Procédé suivant l'une des revendications précédentes,
**caractérisé**
**en ce que**, par un signal d'accusé de réception sur au moins l'une des lignes (13) de commande, il est accusé, par l'unité (2) subordonnée hiérarchiquement, réception d'une transmission de données.

12. Procédé suivant l'une des revendications précédentes,
**caractérisé**
**en ce que**, par un premier signal de statut sur au moins l'une des lignes (13) de commande, il est indiqué, par l'unité (2) subordonnée hiérarchiquement, si des données sont prêtes à être traitées ou si des données ont été précisément traitées.

13. Procédé suivant l'une des revendications précédentes,
**caractérisé**
**en ce que**, par un deuxième signal de statut sur au moins l'une des lignes (13) de commande, il est indiqué, par l'unité (2) subordonnée hiérarchiquement, si des cycles d'attente sont insérés et/ou combien de cycles d'attente sont insérés.

14. Procédé suivant l'une des revendications précédentes,
**caractérisé**
**en ce que**, par un troisième signal de statut sur au moins l'une des lignes (12) de commande, il est indiqué, par l'unité (2) subordonnée hiérarchiquement, si des cycles de bus successifs ont été effectués sans interruption ou s'il s'est produit des états d'erreur.

15. Procédé suivant l'une des revendications précédentes,
**caractérisé**
**en ce que**, par un signal d'interruption sur au moins l'une des lignes (11) de commande, un transfert de données est interrompu par l'unité (4) de commande de bus après un temps déterminé à l'avance.

16. Procédé suivant l'une des revendications précédentes,
**caractérisé**
**en ce que**, respectivement, par un signal de demande et par un signal d'affectation sur au moins l'une des lignes (19, 20) de commande, l'affectation des unités (1) supérieures hiérarchiquement au bus (3) est fixée par l'unité (4) de commande de bus.

17. Montage constitué de
(1) au moins une unité (1) supérieure hiérarchiquement,
(2) au moins une unité (2) subordonnée hiérarchiquement,
(3) un bus (3) entre l'unité (1) supérieure hiérarchiquement et l'unité (2) subordonnée hiérarchiquement, ayant au moins un bus (5) d'adresse, au moins un bus (6) de données et au moins une ligne (9..22) de commande et
(4) au moins une unité (4) de commande de bus, qui commande le bus (3) et qui commande au moins une transmission de données entre une unité (1) supérieure hiérarchiquement affectée au bus et l'unité (2) subordonnée hiérarchiquement adressée par cette unité (1) supérieure hiérarchiquement,
(5) dans lequel on effectue la transmission de données dans une première configuration ou dans une deuxième configuration, et
(a) dans la première configuration, on subdivise la transmission de données en un transfert de données de demande et en un transfert de données de réponse et, dans le temps entre le transfert de données de demande et le transfert de données de réponse, on libère le bus (3) pour la transmission de données d'autres unités (1) supérieures hiérarchiquement et d'autres unités (2) subordonnées hiérarchiquement, et
(b) dans la deuxième configuration, on ne libère pas le bus (3) entre un transfert de données de demande et un transfert de données de réponse,
dans lequel on fixe par un signal de commande sur au moins l'une des lignes (10) de commande le mode dans lequel l'unité supérieure hiérarchiquement accède au bus (3),
**caractérisé**
**en ce que**, par un deuxième signal de configuration sur au moins l'une des lignes (10) de commande, l'unité (2) subordonnée hiérarchiquement décline le transfert de données fixé par l'unité (1) supérieure hiérarchiquement dans la première configuration ou dans la deuxième configuration et exécute le transfert de données dans la deuxième configuration ou dans la première configuration.

18. Montage suivant la revendication 17,
**caractérisé**
**en ce qu'**au moins l'une des unités (1) faisant partie du système de bus comporte un circuit (28) logique, pour demander, décliner et choisir la transmission de données dans la première configuration ou dans la deuxième configuration.

19. Montage suivant la revendication 17 ou 18,
**caractérisé**
**en ce que**, pour une transmission de données dans la première configuration, à la fois l'unité (1) supérieure hiérarchiquement, qui est affectée, et l'unité (2) adressée, qui est subordonnée hiérarchiquement, ont des moyens pour commander dans le temps la transmission de données.

20. Montage suivant l'une des revendications 17 à 19,
**caractérisé**
**en ce que** l'unité (2) subordonnée hiérarchiquement comporte au moins un dispositif (29) de mémoire tampon.

21. Montage suivant la revendication 20,
**caractérisé**
**en ce que** la dimension de mémoire du dispositif (29) de mémoire tampon est au moins si grande qu'un transfert à une vitesse optimale peut être traité.

22. Montage suivant l'une des revendications 17 à 21,
**caractérisé**
**en ce qu'**il est prévu au moins deux unités (1) supérieures hiérarchiquement et en ce que l'unité (4) de commande de bus comporte des moyens de mise en priorité (23) des unités (1) supérieures hiérarchiquement, les moyens de mise en priorité (23) fixant la priorité des unités (1) supérieures hiérarchiquement accédant au bus (3).

23. Montage suivant l'une des revendications 17 à 22,
**caractérisé**
**en ce qu'**au moins l'une des unités (1) supérieures hiérarchiquement comporte une interface maître-esclave.

24. Montage suivant l'une des revendications 17 à 23,
**caractérisé**
**en ce que** le bus (3) peut fonctionner de manière à ce que les adresses, en fonctionnement non multiplexé, puissent être transmises au bus (5) d'adresses, ou en fonctionnement multiplexé, ou au bus (5) d'adresses et au bus (6) de données.

25. Montage suivant l'une des revendications 17 à 24,
**caractérisé**
**en ce qu'**il est prévu au moins une unité centrale d'ordinateur comme unité (1) supérieure hiérarchiquement.

26. Montage suivant l'une des revendications 17 à 26,
**caractérisé**
**en ce que** l'une des unités (1) supérieures hiérarchiquement est prévue comme maître par défaut, dans le cas où aucune autre unité supérieure hiérarchiquement, qui reçoit l'affectation au bus, ne demande le bus.

27. Montage suivant l'une des revendications 17 à 26,
**caractérisé**
**en ce que** le montage fait partie d'un microprocesseur ou d'un microordinateur.
